Europäisches Patentamt

(19) European Patent Office

Office européen des brevets

(11) Publication number: **0 059 690**
**A1**

(12) # EUROPEAN PATENT APPLICATION

(21) Application number: **82830038.4**

(22) Date of filing: **25.02.82**

(51) Int. Cl.³: **F 24 J 3/02**
**G 01 S 3/78**

(30) Priority: **27.02.81 IT 6727781**

(43) Date of publication of application:
**08.09.82 Bulletin 82/36**

(84) Designated Contracting States:
**AT BE CH DE FR GB IT LI LU NL SE**

(71) Applicant: **CENTRO RICERCHE FIAT S.p.A.**
**Strada Torino 50**
**I-10043 Orbassano, (Torino)(IT)**

(72) Inventor: **Palazzetti, Mario**
**Via Don Luigi Balbiano 14/A**
**I-10051 Avigliana (Torino)(IT)**

(72) Inventor: **Ferrari, Giancarlo**
**Via Onorato Vigliani 160**
**I-10127 Torino(IT)**

(74) Representative: **Jacobacci, Filippo et al,**
**c/o JACOBACCI-CASETTA & PERANI S.n.c. Via Alfieri, 17**
**I-10121 Torino(IT)**

(54) **Sun tracking apparatus for a solar energy collector.**

(57) In a solar energy collector of the concentration type, the means for following the apparent motion of the sun which maintain the collector in alignment with the solar radiation are constituted by four heat-sensitive actuators (21) which are arranged to generate a force which increases the temperature, and which are interposed between the frame of the collector and the support structure (3) on which the frame is articulated. The collector further includes an optical system which is arranged, in the non-aligned condition of the collector, to direct the solar radiation predominantly to a greater extent onto that heat sensitive actuator (21) the elongation of which causes the alignment of the collector.

FIG. 3

EP 0 059 690 A1

- 1 -

"Sun tracking apparatus for a solar energy collector"

The present invention relates to solar energy collectors of the type comprising:

solar energy conversion means,

means for concentrating solar energy on the solar energy conversion means,

a support frame for the conversion means and for the solar energy concentration means,

a support structure on which the said frame is articulated, and

means for following the apparent motion of the sun to orient the frame relative to the support structure so as to maintain the conversion means and the solar energy conversion means aligned with the solar radiation.

In solar energy collectors of the type indicated above, the means for following the apparent motion of the sun are generally constituted by electrical and mechanical devices, usually including photocells and an electric circuit for processing the signals emitted by the photocells. A following device which has particular advantages of simplicity and economy compared with the said electro-mechanical devices is illustrated in U.S. Patent No. 4,091,799. This device provides for the use of heat-sensitive expansion means, which are so shaped and disposed as to maintain the solar energy collector automatically in alignment with the solar radiation, solely through the effect of their deformation as a result of heating by the solar radiation. In the example described in the cited U.S. Patent , the said heat-sensitive expansion means are constituted by one or more bimetallic strips which are heated by the solar radiation when the collector is in the non-aligned condition and induce the realignment of the collector by their consequent deformation.

Even though the said known solution has advantages of simplicity and economy compared with electrical and mechanical systems used previously, it does not allow the problem of maintaining a precise alignment of the collector with the solar radiation during the apparent motion of the sun to be solved satisfactorily.

The object of the present invention is that of providing a device for following the apparent motion of the sun for solar energy collectors which has on the one hand, advantages of economy and simplicity, and, on the other hand, allows the collector to be maintained in precise alignment with the solar radiation during the apparent motion of the sun.

In order to achieve this object, the present invention has as its subject a collector for solar energy of the type indicated at the beginning of the present specification, characterised by the combination of the following characteristics:

(a) the means for following the apparent motion of the sun comprise a series of heat-sensitive actuators each arranged to generate a force which increases with temperature, and which are interposed between the frame for supporting the conversion means and the solar energy concentration means and the support structure on which this frame is articulated,

(b) the collector further includes an optical system for directing solar energy onto the said heat-sensitive actuators, heating them differently from each other when the conversion means and the solar energy concentration means are not-aligned with the solar radiation, the said optical system being arranged, in the said non-aligned condition of the collector to heat, to a greater extent, those heat sensitive actuators the elongation of which causes a displacement of the frame about its articulation axis towards the condition in which the conversion means and the solar energy concentration means are aligned with the solar radiation.

By virtue of the said characteristics, the solar energy collector according to the present invention has particular advantages of simplicity and economy in that it does not require the use of complicated electro-mechanical systems for following the apparent motion of the sun and allows the conversion means and the solar energy concentration means to be maintained in precise alignment with the solar radiation.

Further characteristics and advantages of the present invention will emerge from the description which follows with reference to the appended drawings, provided purely by way of non-limiting example, in which,

Figure 1 is a view of a solar energy collector according to the invention,

Figures 2, 3 are two sectional views , on an enlarged scale, of a detail of Figure 1 in two different conditions of operation,

Figure 4 is a sectional view , on an enlarged scale, of a detail of Figure 2, and

Figure 5 is a perspective view, on an enlarged scale of a further detail of Figure 2.

The solar energy collector illustrated in the drawings is of the type described in German Patent Application DT-OS 30 12 214 filed by the same applicants.

The collector, which is generally indicated by the reference numeral 1, comprises a frame 2 articulated (in a manner which will be described in detail below)on a column 3 forming part of a fixed support structure 4 including a hollow beam 5. The frame 2 includes four Fresnel lenses 6, which, in the example illustrated,are coplanar with each other and are formed in a single moulded panel . of plastics material.        The frame 2 further includes a support 7, having coplanar flanges 8 to which the panel of lenses 6 is fixed ,and carrying four connection legs 9.  The free ends of the connection legs 9 support the same number of solar energy converters 10 each disposed on the focal axis of a respective one of the four lenses 6.  Each converter 10 comprises a photovoltaic cell and means for transferring the heat dissipated in the photovoltaic cell to a liquid. Each connection leg 9 comprises two tubular copper elements 11 each having an internal coating of insulating material. The two tubular elements 11 associated with each converter 10 are used for the delivery and the return of the liquid for taking up heat dissipated in the photovoltaic cell of the concentrator. The two tubular elements 11 of each connection leg 9 are further used as conductor elements for the electrical connection to the photovoltaic cell. The tubular elements 11 communicate with each other through connectors disposed within the support 7 so as to allow the liquid to flow through the four concentrators 10 in series. The support 7 is provided with an inlet connection 12 and an outlet connection 13 communicating through pipes 14 with an inlet pipe 15 and an outlet pipe 16 disposed within the beam 5.

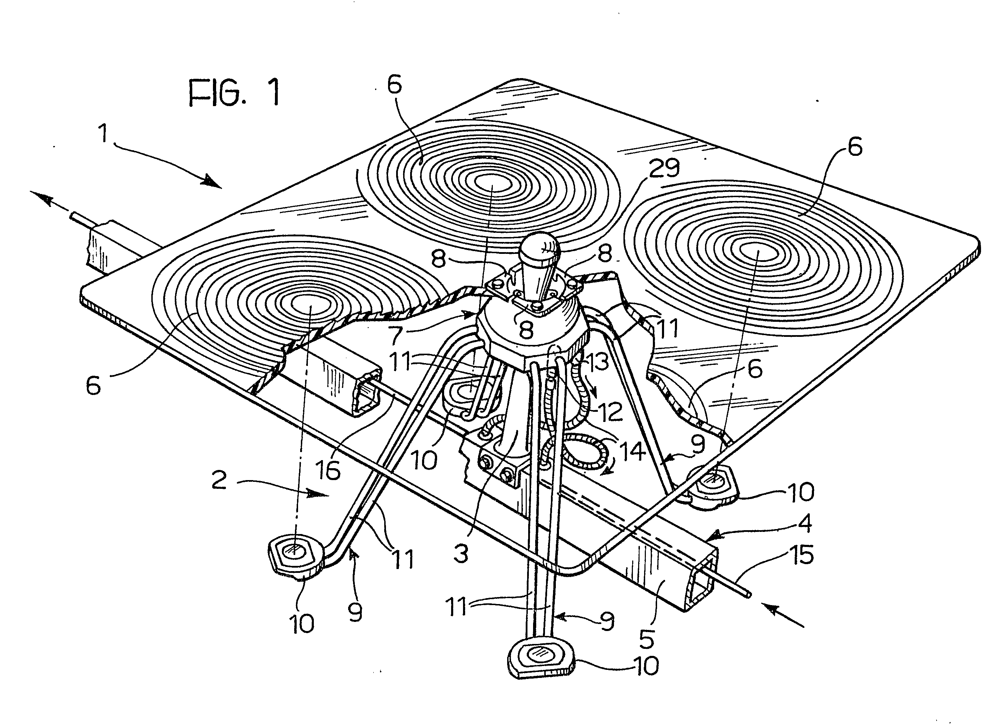

A plurality of solar energy collectors of the type illustrated in Figure 1 may be mounted on a single support beam in the manner described in the German Patent Application mentioned above, for example in correspondence with a transparent sheet in the roof of a house.

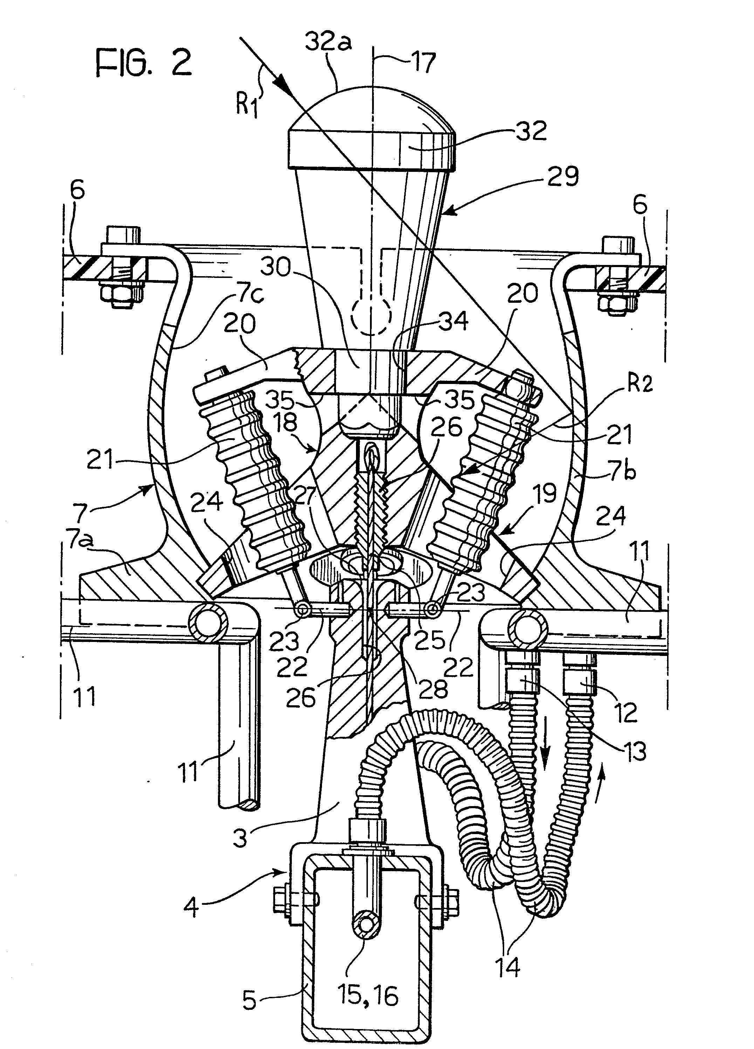

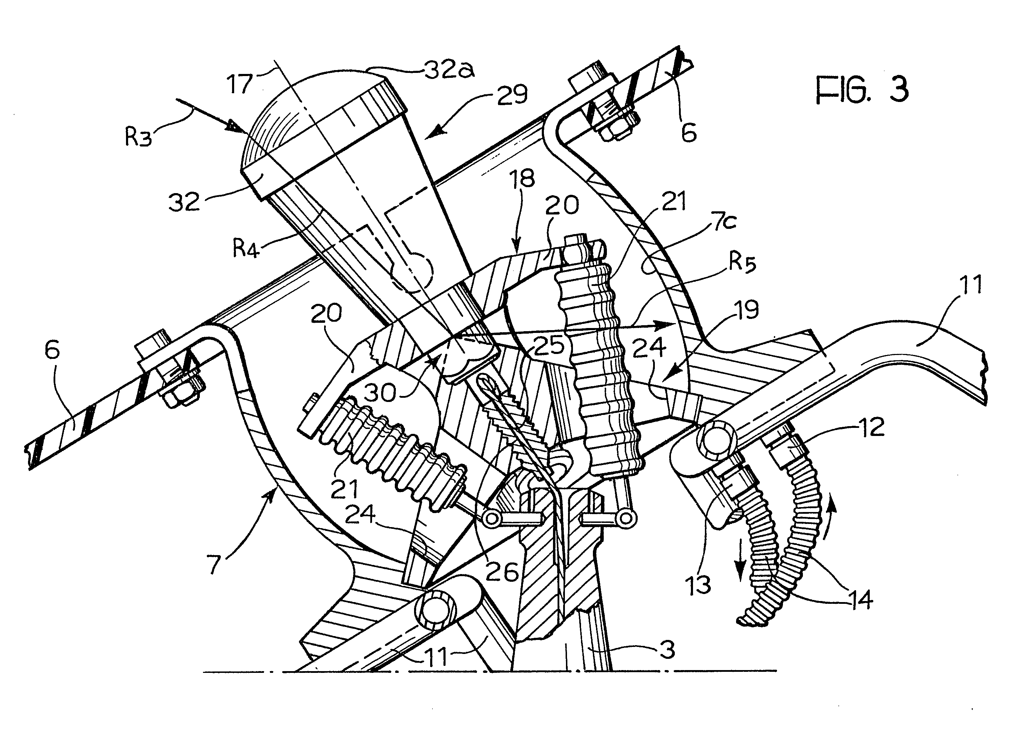

With reference to Figures 2, 3 the support 7 comprises a base 7a to which are fixed the tubular elements 11 and a goblet- shaped part 7b having an internal reflecting surface which constitutes a concave mirror 7c and has a central axis of symmetry 17 parallel to the focal axes of the lenses 6. The aperture of the mirror 7c is disposed in the plane of the lenses 6.

Within the support 7 is fixed coaxiall a further support 18 which includes a base portion 19 fixed to the support 7 by means of any fixing system, preferably by means of a fitting system in which the coupling and decoupling are achieved by relative rotation of the two elements 18, 7 about the axis 17.

The support 18 further includes four arms 20 extending radially and equi-angularly spaced from each other relative to the axis 17.

Four heat sensitive actuators 21 the lengths of which increase with temperature are equi-angularly spaced from each other and disposed within the support 7 symmetrically about the axis 17. Each heat sensitive actuator 21 is interposed between a corresponding arm 20 of the support 18 and the column 3 of the support structure 4. The end of each heat sensitive actuator 21 is connected to an arm 20 of the support 18 by an articulated joint. The opposite end of the heat sensitive actuator, is however articulated to the column 3 so as to be rotatable about a first axis 22 extending radially of the central axis 17 and about a second axis 23 perpendicular to the plane containing the axis 22 and the direction of action of the heat sensitive actuator 21.

The base 19 of the support 18 is provided with holes 24 through which the heat sensitive actuators 21 extend.

The column 3 and the support 18 are connected together by a cable 25 fixed at one end to the support 18 and at the opposite end to the column 3. More particularly, the end fixed to the support 18 is clamped within a screw-threaded clamping ferrule 26 screwed into a corresponding screw-threaded hole formed in the lower surface of the support 18. The cable 25 is disposed within a hole 26 formed in the column 3 which has a flared mouth 27 diverging outwardly from a zone which corresponds substantially to the point 28 of intersection of the radial axes 22 and the central axis 17. Thus only those movements of the support 18 (and hence of the frame 2 of which it forms part) relative to the support structure 4 which consist substantially of a rotation about the point 28 are allowed. This point may thus be identified as the centre of articulation of the frame 2 on the support structure 4.

The reference numeral 29 indicates an optical collimator having a body of transparent material of essentially frusto-conical form the end portions 30, 32 of which are defined respectively by a prismatic surface 31 having four triangular faces 31a perpendicular to each other and a convex surface which defines a lens 32a the focal axis of which passes through the vertex 33 of the prismatic surface 31.

The portion 30 of the collimator body 29 is fixed within a seat 34 formed in the upper part of the support 18. The portion 32 of the collimator 29 projects outwardly of the aperture of the concave mirror 7c.

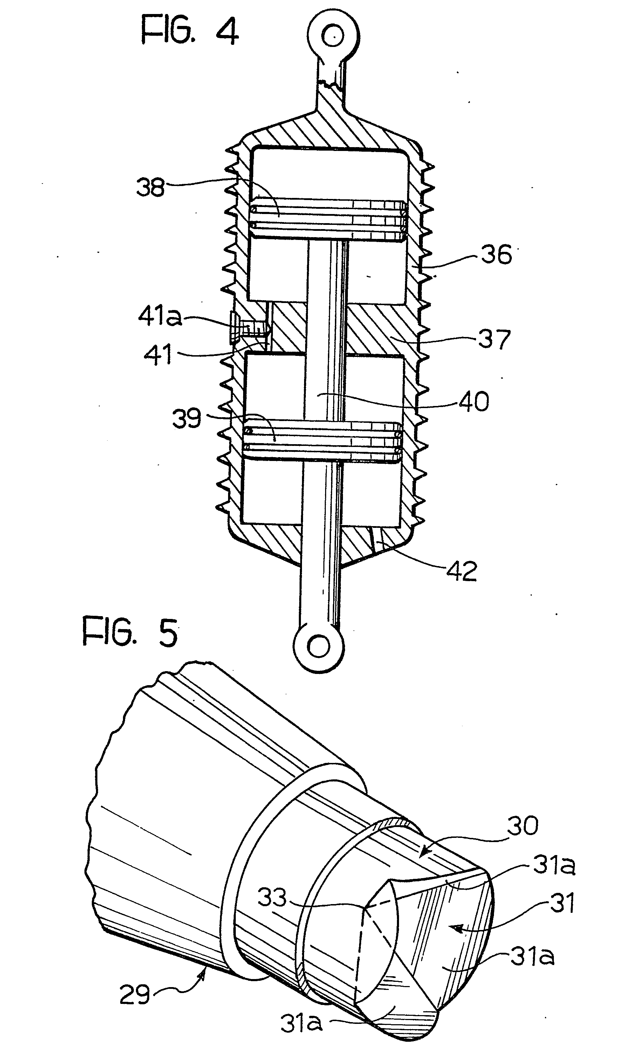

Figure 4 illustrates one of the heat sensitive actuators 21 in section. This heat sensitive actuator comprises a cylindrical casing 36 divided internally by a septum 37 into two equal cylindrical chambers within which are slidable two pistons 38, 39 connected together by a rod 40 which passes through the septum 37 and projects from one end of the actuator 21. That part of each internal chamber between the respective piston and the septum 37 is filled with oil. The septum 37 has a narrow passage 41, which can be adjusted by means of a screw 41a, through which the oil within the casing can pass during displacements of the pistons, so as to damp these displacements. The chamber between the piston 38 and the end of the casing opposite that from which the rod projects is filled with a fluid which is able to expand markedly with an increase in temperature, for example Freon. The chamber between the piston 39 and the adjacent end of the actuator 21 communicates with the exterior through one or more holes 42.

The operation of the solar energy collector described above is as follows:

the solar energy collector is "aligned" with the solar radiation when the frame 2 of the collector is in a position relative to the support structure 4 such that the central axis 17 is parallel to the solar radiation, that is when the focal axes of the lenses 6 are parallel to the solar radiation. Under these conditions the maximum solar energy available is focused by the lenses 6 onto the converters 10 which convert the solar energy into electrical energy and into heat given up to the working liquid flowing in the collector.

When the solar energy collector is in a "non-aligned" condition relative to the solar radiation, that is when the central axis 17 and the focal axes of the lenses 6 are not parallel to the solar radiation, the collector according to the invention is able, alone, to bring itself back into the aligned condition.

Figure 2 illustrates the case in which the solar radiation is inclined to the central axis 17 at an angle greater than the half-aperture angle of the conical body of the optical collimator 29. A solar ray which passes through the optical collimator 29 and impinges on the concave mirror 7$\underline{c}$ is shown at $R_1$. $R_2$ shows the solar ray reflected from the mirror 7$\underline{c}$ towards the heat-sensitive actuator 21 illustrated to the right of Figure 2. In the said non-aligned condition, therefore, the solar rays are directed by the mirror 7$\underline{c}$ onto the heat-sensitive actuators 21 so as to heat these to differing extents. More particularly, those heat sensitive acutators 21 are heated (and hence extend) most the extension of which tends to bring the support 18 (and hence the whole frame of the collector, which is fixed thereto) into alignment with the solar radiation.

Because of the connection constituted by the cable 25, which constrains the support 18 to carry out solely rotational movements about the centre of articulation 28, the extension of the heat sensitive actuators 21 causes the support 18 to rotate, and therewith the frame 2, the lenses 6 and the concentrators 10, towards the condition of alignment with the solar radiation.

Figure 3 illustrates the collector in the position in which the inclination of the solar radiation to the central axis 17 is reduced to an angle less than the half-aperture angle of the cone of the collimator 29. An incident solar ray which impinges the surface of the lens 32$\underline{a}$ is indicated by $R_3$. $R_4$ shows the ray refracted by the lens 32$\underline{a}$ which impinges on the prismatic reflecting surface 31 of the collimator 29, and $R_5$ shows the ray which is reflected from one of the faces 31$\underline{a}$ of the prismatic surface 31. This ray passes through an aperture 35 in the support and is incident on the heat sensitive actuator 21 illustrated to the right in Figure 3. This causes a further extension of this actuator and hence brings the frame 2 closer to the position in which the central axis 17 of the collimator 29 is parallel to the solar radiation. Should this position be passed, the ray $R_4$ refracted by the lens 32$\underline{a}$ is reflected by another of the faces 31$\underline{a}$ of the prismatic surface 31 of the collimator onto the thermo-sensitive actuator 21 illustrated to the left in Figure 3, which causes the collimator to return to the position of alignment with the solar radiation. In a short time the system thus reaches an equilibrium position in which the central axis 17 is aligned with the solar radiation. During the apparent motion of the sun, no sooner does this tend to create a misalignment of the solar radiation with respect to the central axis 17 of the optical collimator than the latter re-establishes the aligned equilibrium position.

The solar energy collector according to the present invention is thus able to maintain itself automatically in the aligned condition with the solar radiation without requiring the use of complicated electrical and mechanical systems.  At the same time, the optical system constituted by the mirror 7c and the optical collimator 29 allows the achievement of precise alignment of the collector with the solar radiation.

The particular structure described above, moreover, has evident advantages of simplicity and facility of manufacture and assembly.

CLAIMS

1. Solar energy collector, comprising:
solar energy conversion means (10),
means (6) for concentrating solar energy on the
solar energy conversion means ( 10),
a support frame (2) for the conversion means (10)
and the solar energy concentration means (6 ),
a support structure (4) on which the said frame
(2) is articulated, and
means (21) for following the apparent motion
of the sun to orient the frame (2) relative to the support
structure (4) so as to maintain the conversion means
(10) and the solar energy concentration means (6) aligned
with the solar radiation ,
characterised by the combination of the following
characteristics:
(a) the means for following the apparent motion of the
sun comprise a series of heat sensitive actuators (21),
having lengths which increase with temperature and which
are interposed between the frame (2) for supporting the
conversion means (10) and the solar energy concentration
means (6) and the support structure (4) to which the
frame is articulated,
(b) the solar energy collector further includes
an optical system (7c, 29) for directing the solar
energy onto the said heat sensitive actuators (21),
heating them differently from each other when the
conversion means and solar energy concentration means
are in a non-aligned condition with the solar radiation
the said optical system being arranged, in the said
non-aligned condition, to heat to a greater extent
those heat sensitive actuators (21) the extension of
which causes a displacement of the frame (2) about
its articulation axis towards the condition in which
the conversion means (10) and the solar energy
concentration means (6) are aligned with the solar
radiation.

2.    Solar energy collector according to Claim 1, characterised in that the support frame(2)for the conversion means(10)and    solar energy concentration means (6) is articulated on the support structure (4) by means of the interposition of the said heat sensitive actuators(21), which are equi-angularly spaced about a central axis (17) parallel to the focal axes of the said concentration means (6) and each having an end articulated to the support structure (4) about a first axis (22) which extends radially with respect to  the said central axis (17) and about a second axis (23) perpendicular to the plane containing the said first axis (22) and the direction of action of each heat sensitive actuator (21); the opposite end of each heat sensitive actuator (21) being connected to the frame (2) by an.articulated joint and in that the said optical system includes a concave mirror (7c) fixed to the frame (2), and surrounding the heat sensitive actuators (21) and having an axis of symmetry coincident with the said central axis (17).

3.    Solar energy collector according to Claim 2, characterised in that the support frame for the conversion means (10)and the solar  energy concentration means (6) include a support (18) which is located centrally within the said concave mirror(7c) and which comprises a series of arms (20) extending radially with respect to the said central axis (17),    the ends of which carry the said articulation joints of the heat sensitive actuators (21).

4.   Solar energy collector according to Claim 2, characterised in that the heat sensitive actuators (21) are each constituted by an extensible cylinder containing a fluid having a high coefficient of thermal expansion.

5.   Solar energy collector according to Claim 4, characterised in that each heat sensitive actuator (21) comprises a cylindrical casing (36) and piston means (38,39) which define, within the casing, a chamber filled with fluid with a high coefficient of thermal expansion and a chamber communicating with the exterior.

6.   Solar energy collector according to Claim 5, characterised in that the said piston means comprise a pair of pistons (38,39) connected by a rod (40) which is slidable in a partition (37) within the casing (36), and in that this partition (37) has a narrow passage (41) which puts the two chambers between the pistons (38,39) and the partition (37) in communication with each other, these chambers being filled with oil.

7.   Solar energy collector according to Claim 3, characterised in that the said support (18) is provided with a base (19) fixed to the frame (2) and having an aperture (24) through which the heat sensitive actuators (21) extend.

8.   Solar energy collector according to Claim 3, characterised in that the collector       further includes connecting means between the support structure (4) and said support (18) arranged to allow solely rotational movements  of the support (18) about a centre of articulation of the frame (2) corresponding substantially to the point of intersection (28) of the said central axis (17) and   the radial axes (22) of articulation of the heat sensitive actuators (21).

9.   Solar energy collector according to Claim 8, characterised in that the said connection means comprise a cable (25) having one end fixed to the support structure (4) and the other end fixed to the said support (18), the said cable (25) being guided in a cavity in the support structure (4) up to the vicinity of the said centre of articulation (28) of the frame.

10.   Solar energy collector according to Claim 3, characterised in that the said optical system further includes an optical collimator (29) arranged to act when the said central axis (17) isnon-aligned with the solar radiation at a relatively small angle in order to deflect the solar radiation onto the heat sensitive actuator (21) the extension of which causes the alignment of the collector with the solar radiation.

11.   Solar energy collector according to Claim 10, characterised in that the optical collimator comprises a lens (32a) and a prismatic reflecting surface (31) having its apex in correspondence with the focal axis of the lens (32a).

12.   Solar energy collector according to Claim 11, characterised in that the optical collimator (29) is constituted by a substantially frusto-conical body of transparent material, the end portions (32,30) of which define the lens (32a) and the prismatic reflecting surface (31) respectively of the collimator.

13.   Solar energy collector according to Claim 12, characterised in that the optical collimator (29) is fixed at its centre to the said support (18) by an end portion (32) defining the lens (32a) extending out from the aperture of the concave mirror (7c).

14. Solar energy collector according to Claim 13, characterised in that the end portion (30) of the body of the collimator defining the prismatic reflecting surface (31) is inserted in a seat (34) of a shape corresponding to that of the said support (18), the wall of the support (18) in which the said seat (34) is formed being tranversed by radial apertures (35) for allowing the solar radiation reflected by the said prismatic surface (31) to reach the heat sensitive actuators.

15. Solar energy collector according to Claim 2, characterised in that the means for concentrating the solar energy comprise a series of lenses (6) disposed in the plane of the aperture of the said concave mirror (7c) and in that the conversion means for the solar energy comprise a series of solar energy converters (10) disposed on the focal axes of the said lenses respectively.

FIG. 1

FIG. 2

2/4

0059690

FIG. 3

0059690

FIG. 4

38

36

41a

41

37

39

40

42

FIG. 5

30

31a

33

31

31a

29

31a

**European Patent Office**

**EUROPEAN SEARCH REPORT**

| Category | Citation of document with indication, where appropriate, of relevant passages | Relevant to claim |
|---|---|---|
| X | DE - B2 - 2 805 425 (N.V. PHILIPS' GLOEILAMPENFABRIEKEN) <br> * claim 1; fig. 1, 4, 8 * <br> & GB - A - 1 553 359 | 1,2,4, 5 |
| A | DE - A1 - 2 742 014 (N.V. PHILIPS' GLOEILAMPENFABRIEKEN) <br> * claim 12; fig. 1 * <br> & US - A - 4 159 710 | 1,4,5 |
| D,A | US - A - 4 091 799 (R.E. STEINER) <br> * column 4, lines 59, 60 * | 1 |
| A | GB - A - 1 552 671 (STANDARD TELEPHO-NES AND CABLES LTD.) <br> * page 1, lines 84 to 89; fig. 1b * | 4,5 |
| A | US - A - 4 185·615 (E.W. BOTTUM) <br> * column 2, line 65 to column 3, line 5; fig. 3 * | 4-6 |
| D,A | DE - A1 - 3 012 214 (CENTRO RICERCHE FIAT S.P.A.) <br> * complete document * <br> & US - A - 4 280 853 | 15 |
| A | DE - A1 - 2 842 084 (SIEMENS AG) <br> * complete document * <br> & US - A - 4 283 588 | 1 |

**DOCUMENTS CONSIDERED TO BE RELEVANT**

**CLASSIFICATION OF THE APPLICATION (Int. Cl. 3)**

F 24 J 3/02
G 01 S 3/78

**TECHNICAL FIELDS SEARCHED (Int.Cl. 3)**

F 24 J 3/00
G 01 S 3/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 23-04-1982 | KRABEL |

EPO Form 1503.1 06.78